# EUROPEAN PATENT SPECIFICATION

(11) **EP 1 655 958 B1**
(45) Date of publication and mention of the grant of the patent: **12.01.2011**
(21) Application number: 05024003.5
(22) Date of filing: 03.11.2005
(51) Int. Cl.: H04N 5/445, H04N 5/00

(54) **Apparatus and method for displaying digital broadcasting program information**
Vorrichtung und Verfahren zur Anzeige von Digitalrundfunkprogramminformationen
Dispositif et procédé pour l'affichage d'information de programmes de radiodiffusion numérique

(30) Priority: 03.11.2004 KR 2004089066; 10.10.2005 KR 2005095163
(43) Date of publication of application: 10.05.2006
(73) Proprietor: Samsung Electronics Co., Ltd., Suwon-si, Gyeonggi-do (KR)
(72) Inventor: Kim, Tae-Hyung, Yeongtong-gu Suwon-si Gyeonggi-do (KR); Kim, Sun-Il, Yeongtong-gu Suwon-si Gyeonggi-do (KR)
(74) Representative: Grünecker, Kinkeldey, Stockmair & Schwanhäusser Anwaltssozietät

(56) References cited:
- WO-A-2004/023283
- US-A- 6 115 080
- US-A- 6 147 714
- US-A1- 2002 056 102

## Description

### BACKGROUND OF THE INVENTION

### 1. Field of the Invention

The present invention relates to a mobile communication terminal capable of receiving digital broadcasting and displaying program information regarding the digital broadcasting, and a method thereof; and more particularly, to an apparatus and a method for displaying program information on a background image and a method thereof.

### 2. Description of the Related Art

Electronic program guide (EPG) information is sent from broadcasting centers for a specific period of time and includes information regarding titles and simple keynotes of program broadcasting organized by time and channel. Terminals receive the EPG information and store it in an internal memory or file system, enabling a user to search for the EPG information and to select desired broadcasting.

However, it is very inconvenient for the user to individually search for an EPG menu of each time in order to recognize broadcasting programs and a channels for the programs. Therefore, if the user can recognize broadcasting programs and the channels for the programs without additional operations, the user may more satisfactorily and conveniently view a desired broadcasting program.

From US-A-6-115080 an apparatus for displaying digital broadcasting program information in a terminal capable of receiving digital broadcasting is known, the apparatus including a digital broadcasting receiving unit for receiving broadcasting channel guide information, a memory for storing received broadcasting channel guide information, a control unit for creating program information based on the broadcasting channel guide information stored in the memory, and a display unit for displaying the program information created by the control unit.

In addition, the user must search for the EPG information in a digital broadcasting mode. However, if the user searches for the EPG information in the digital broadcasting mode, a corresponding module (e.g., a broadcasting receiving module) may be driven, so that power consumption occurs. On the assumption that the user wants to only check a broadcasting program of a specific channel at current time and does not want to view the broadcasting program, if the user can check the broadcasting program without using the digital broadcasting mode, it is unnecessary to consume power.

### SUMMARY OF THE INVENTION

This object is achieved by a mobile terminal capable of receiving digital broadcasting, having the features of claim 1 and by a method for displaying digital broadcasting program information.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view illustrating a mobile communication terminal capable of receiving DMB according to a preferred embodiment of the present invention;
FIGs. 2A and 2B illustrate images having displayed DMB program information according to a preferred embodiment of the present invention;
FIG 3 is a block diagram illustrating a mobile communication terminal capable of receiving digital multimedia broadcasting according to a first embodiment of the present invention;
FIG 4 is a ladder diagram illustrating a method for displaying DMB program information in the mobile communication terminal of FIG 3;
FIG 5 is a block diagram illustrating a mobile communication terminal capable of receiving DMB according to a second embodiment of the present invention;
FIG 6 is a ladder diagram illustrating a method for displaying DMB program information by the mobile communication terminal of FIG 5;
FIG 7 is a view illustrating a menu image for preference channel registration used for displaying DMB program information according to a preferred embodiment of the present invention;
FIG 8 illustrates three background images which can be displayed in an idle mode before a program of a corresponding channel is displayed in the DMB mode through user selection;
FIG 9 illustrates images in which the DMB program information is displayed in the idle mode according to a preferred embodiment of the present invention;
FIG 10 is a view for explaining left directional scrolling in the image in which the DMB program information is displayed in the idle mode according to a preferred embodiment of the present invention;
FIG. 11 is a flowchart illustrating a method of displaying DMB program information on a background image in an idle mode according to a preferred embodiment of the present invention; and
FIG. 12 is a flowchart illustrating a method of registering preference channels in order to display DMB program information on a background image in an idle mode according to a preferred embodiment of the present invention.

### DETAILED DESCRIPTION OF THE PREFERRED EMBODIMENT

Hereinafter, a preferred embodiment of the present invention will be described in detail with reference to the accompanying drawings. Note that the same or similar components in drawings are designated by the same reference numerals as far as possible although they are shown in different drawings. Although many specific items, such as detailed channel numbers, detailed program names, etc., are shown in the following description, these are provided for the purpose of overall comprehension about the present invention. Therefore, it is generally known to the skilled in the art that the present invention can be practiced without being limited by the specific embodiments discussed herein. In the following description of the present invention, a detailed description of known functions and configurations incorporated herein will be omitted when it may make the subject matter of the present invention unclear.

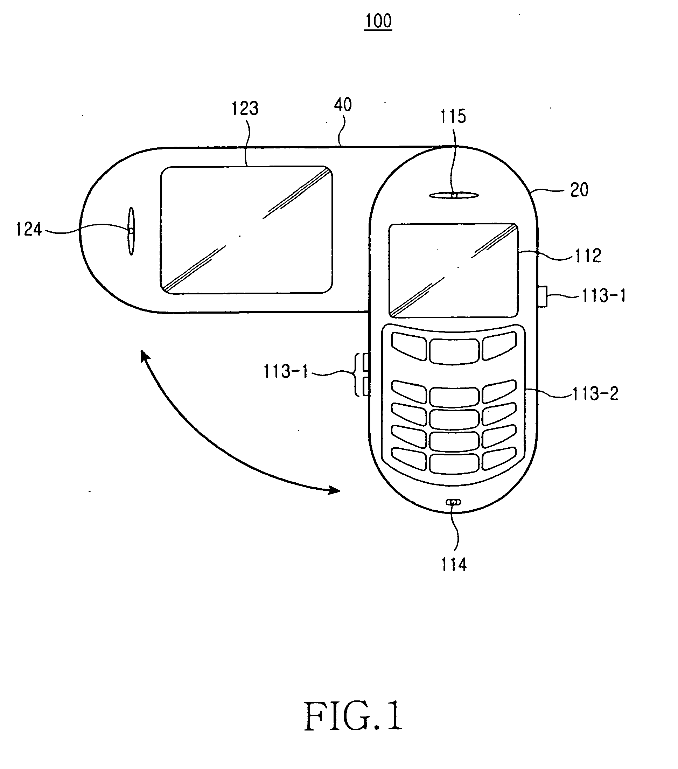

FIG. 1 is a perspective view illustrating a mobile terminal capable of receiving digital multimedia broadcasting (DMB) according to a preferred embodiment of the present invention. The present invention may employ every terminal capable of receiving digital broadcasting, and it is assumed that the mobile communication terminal shown in FIG 1 is a portable phone capable of receiving DMB.

A mobile communication terminal 100 according to a preferred embodiment of the present invention includes a main body 20 and a sub-body 40 coupled under the main body 20. The main body 20 includes a first display unit 112, a key input unit 113 having a side key 113-1 and a key pad 113-2, a microphone 114, and a first speaker 115, and is mainly used for performing functions relating to a portable telephone. The sub-body 40 includes a second display unit 123 and a second speaker 124 and is mainly used for performing multimedia functions. Herein, although a rotary-type sub-body 40 is illustrated, the sub-body 40 can be made as a folder type. A coupling relationship between the main body 20 and the sub-body 40 does not directly relate to the subject matter of the present invention.

As shown in FIG 1, when the mobile communication terminal 100 is opened (that is, the main body 20 is not overlapped with the sub-body 40), DMB program information is displayed on a background image of the second display unit 123. If necessary, the first display unit 112 or both the display units 112 and 123 may display DMB program information on their background images. This is determined according to the selection of the user.

When the sub-body 40 is rotated and overlapped with the main body 20 (that is, the user can see only the first display unit 112), the DMB program information is displayed on a background image in the first display unit 112.

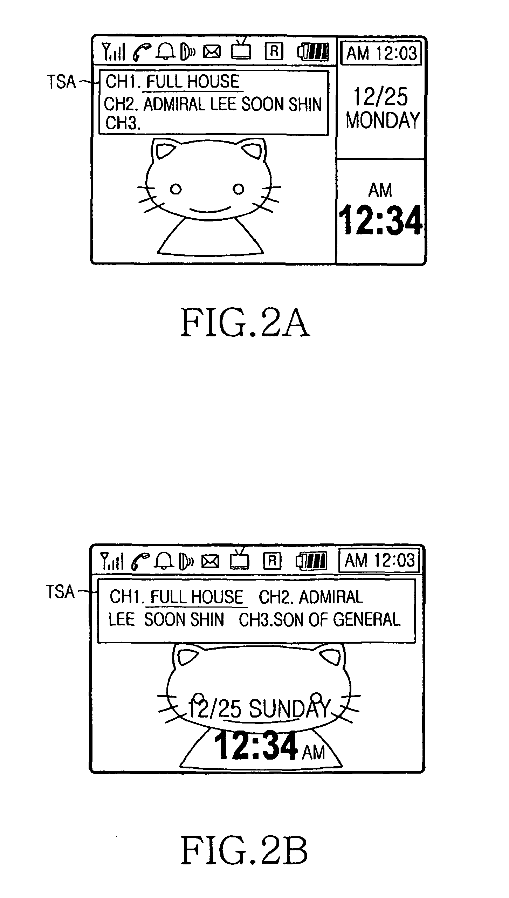

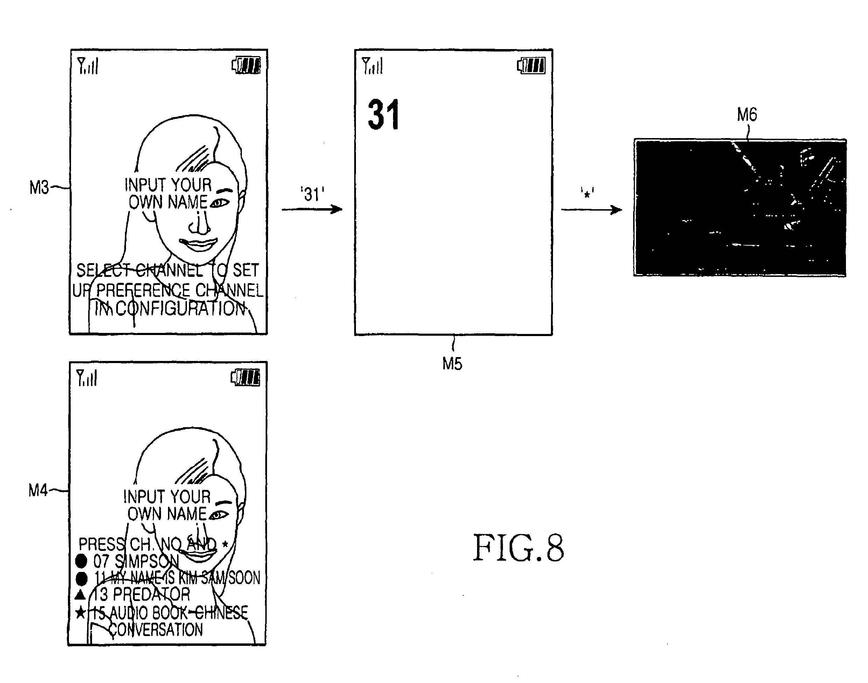

Herein, the DMB program information may be displayed in a predetermined area on a background image or as an entire image.In the following description, it is assumed that the DMB program information is displayed on a text slide area of a background image shown in FIGs 2a and 2b or an image M4 shown in FIG 8 is displayed on a partial area.

The mobile communication terminal 100 having the above described structure may perform a portable telephone function or a multimedia function according to operation by a user through the key input unit 113.

In addition, the user can view DMB through the second display unit 123 and confirm original functions of a portable terminal through the first display unit 112. The first display unit 112 and the second display unit 123 may be implemented using liquid crystal displays (LCDs).

FIGs. 2A and 2B illustrate images on which DMB program information is displayed according to a preferred embodiment of the present invention.

Reference numeral 'TSA' of FIGs. 2A and 2B represents the text slide areas of background images.

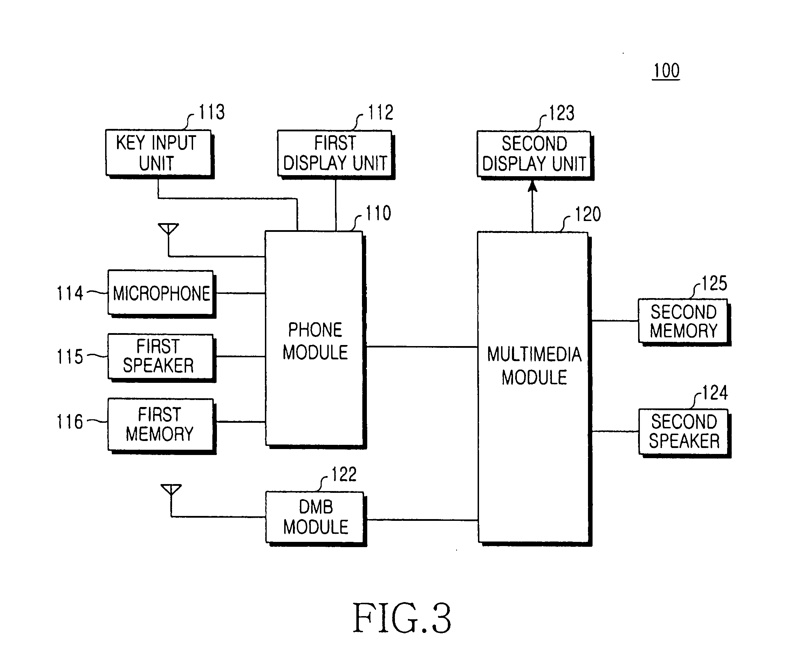

FIG 3 is a block diagram illustrating a structure of a mobile communication terminal capable of receiving DMB according to a first embodiment of the present invention.

As shown in FIG 3, it is assumed that a first module (a phone module 110), a second module (a DMB module 122), and a third module (a multimedia module 120) are separated from each other. However, all or a portion of three modules may be included in one chip (a control unit).

The mobile communication terminal 100 according to a preferred embodiment of the present invention may include a portable telephone capable of receiving DMB. The mobile communication terminal 100 may include the portable telephone function module (called a phone module) 110 for controlling a portable telephone function, the DMB module 122 for performing a broadcasting service receiving function, and the multimedia module 120 for controlling a multimedia function. The phone module 110 controls the first display unit 112, the key input unit 113, the microphone 114, the first speaker 115, and a first memory 116. The multimedia module 120 controls the second display unit 123, the second speaker 124, and a second memory 125.

The phone module 110 may be realized using radio frequency (RF) transmit/receive units and a modem chip (e.g., a QualComm MSM 5500 modem chip). The phone module 110 transmits/receives signals relating to communication and controls overall mobile communication terminal functions including portable telephone functions. The first display unit 112 displays information regarding the overall mobile communication terminal functions including the portable telephone functions and displays DMB program information o n an entire background image or a portion of the background image (e.g., a text slide area)..

The key input unit 113 receives data or a control command according to operation by a user. The microphone 114 receives audio signals. The first speaker 115 outputs audio signals (e.g., voice in communication) relating to the portable telephone functions. The first memory 116 stores information regarding the overall mobile communication terminal functions including the portable telephone functions.

The DMB module 122 is a module for receiving digital broadcasting and includes a unit for receiving a DMB RF signal through an antenna and a demodulator, which are not shown in the drawings because the subject matter according to the present invention is not concerned with such a detailed construction.

The multimedia module 120 decodes DMB data sent from the DMB module 122 into multimedia information (image, letters, and audio), and outputs the multimedia information to a user. The second display unit 123 displays an image signal output from the multimedia module 120. In addition, the second display unit 123 displays DMB program information on an entire background image or a portion of the background image (e.g., a text slide area). The second speaker 124 outputs an audio signal output from the multimedia module 120. The second memory 125 provides a DMB service and stores information (e.g., EPG information and a preference program information) regarding a DMB service.

The multimedia module 120 can determine a display unit for displaying DMB program information according to a folder state. In other words, if the folder is closed, the multimedia module 120 allows the first display unit 112 to display the DMB program information. If the folder is opened, the multimedia module 120 controls the second display unit 112 or both the display units 112 and 123 to display program information.

The first speaker 115, the second speaker 124, the first display unit 112, and the second display unit 123 may be constructed either as separate hardware or one integrated speaker and one integrated display unit. In addition, the multimedia module 120 may be realized using the H.264 CODEC multimedia processor.

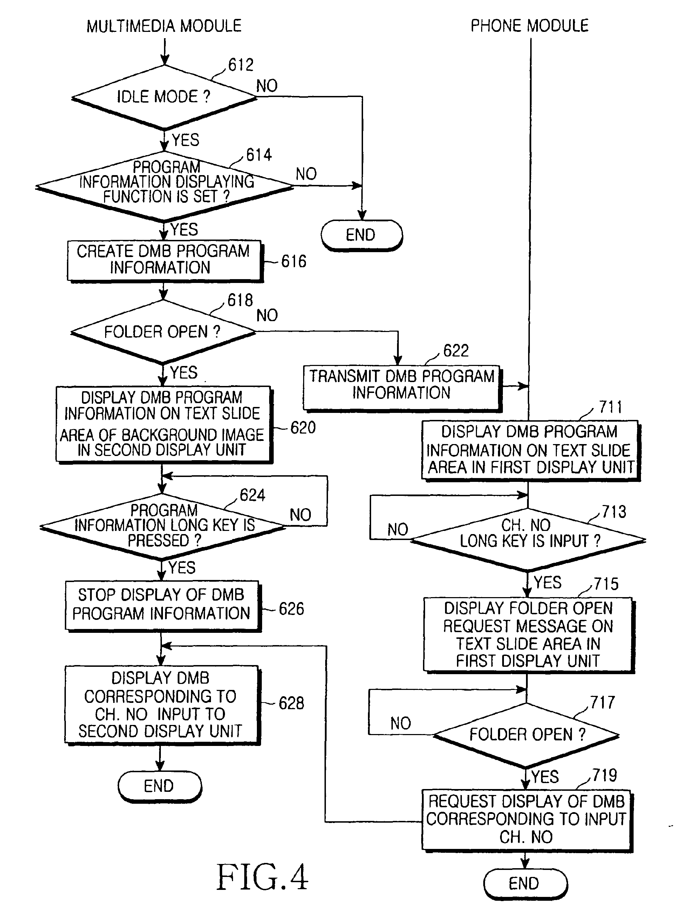

FIG 4 is a ladder diagram illustrating a method for displaying DMB program information by the mobile communication terminal shown in FIG 3.

If the multimedia module 120 detects an idle mode in step 612, the multimedia module 120 determines if a program information displaying function is set in step 614. If the program information displaying function is set, the multimedia module 120 creates DMB program information based on EPG information stored in the second memory 125 in step 616. Then, the multimedia module 120 determines if the mobile communication terminal folder is opened in step 618.

If the phone is not in an idle mode in step 612, or the broadcasting slide function is not set in step 614, the process ends.

If the folder is opened, the multimedia module 120 controls the second display unit 123 to display the DMB program information on a text slide area of a background image in step 620 as shown in FIGs. 2A and 2B. At this time, a user can select a channel based on the DMB program information. Herein, the user can use a long key in order to select the channel. In other words, when the broadcasting slide function is set and a user presses a predetermined numeral key for a long time, the program of a corresponding DMB channel is displayed.

In step 624, the multimedia module 120 waits for a channel number long key press. Once pressed, the multimedia module 120 allows the second display unit 123 to stop displaying the DMB program information in step 626. In step 628, the DMB module is operated, receives a broadcasting program corresponding to the input channel number, and displays the broadcasting on the second display unit 123 through the multimedia module 120.

If the folder is not opened in step 618, the multimedia module 120 transmits DMB program information to the phone module 110 in step 622. After receiving the DMB program information, the phone module 110 controls the first display unit 112 to display the DMB program information on a text slide area of a background image in step 711. Thereafter, the phone module 110 waits for a channel number long key press in step 713. If the long key is pressed, the phone module 110 controls the first display unit 112 to display a folder open request message on the text slide area of the background image in step 715. If the user opens the folder based on the folder open request message, the phone module 110 detects the open of the folder and requests the multimedia module 120 to display DMB corresponding to an input channel number in step 719. The multimedia module 120 having received the request controls the second display unit 123 to display DMB corresponding to the input channel number in step 628.

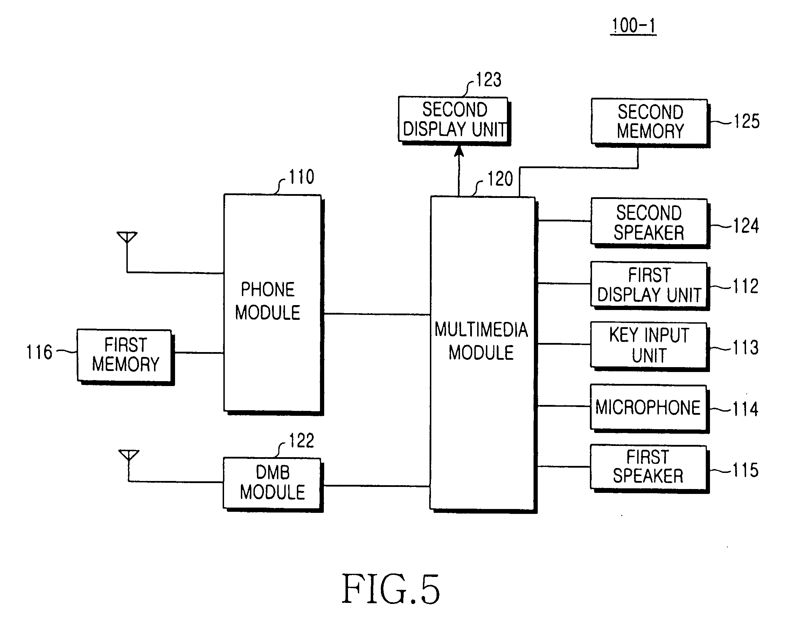

FIG. 5 is a block diagram illustrating a mobile communication terminal 100-1 capable of receiving DMB according to a second embodiment of the present invention.

The mobile communication terminal 100-1 includes a personal data assistant ("PDA") capable of receiving digital multimedia broadcasting. In a comparison of components in FIGs. 3 and 5, the components under the control of the phone module 110 in FIG 3, except for the first memory 116, are controlled by the multimedia module 120 in FIG. 5 instead. This embodiment is based on the intrinsic structure of a PDA. Operation of each component shown in FIG. 5 is like that of its corresponding component in FIG 3, except for the basic functions of the PDA. Accordingly, a detailed description about each component will be omitted and the same reference numerals will be employed.

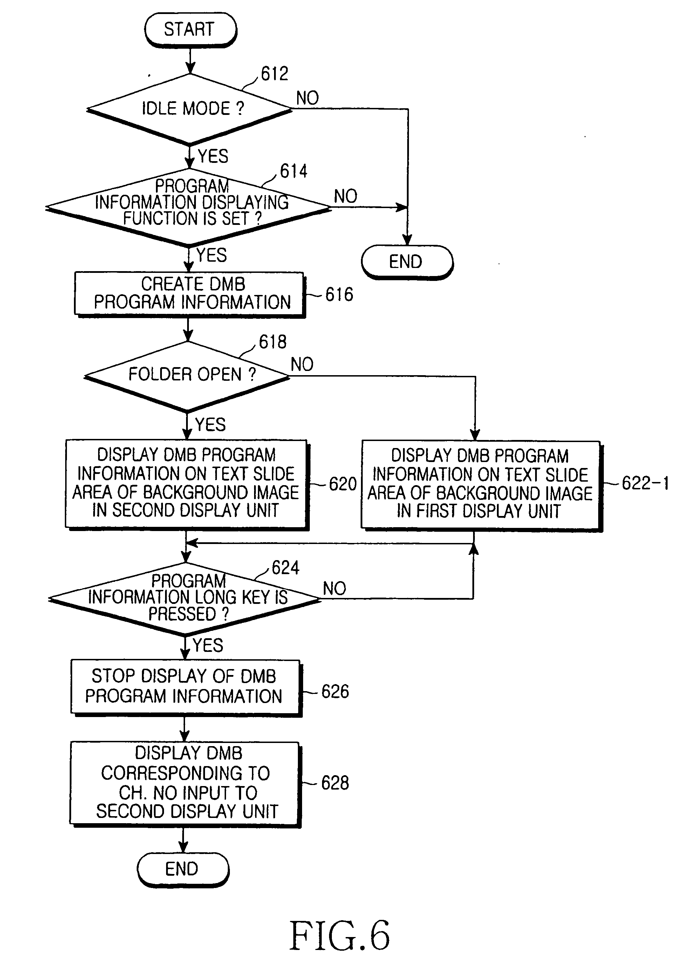

FIG 6 is a ladder diagram illustrating a method for displaying DMB program information by the mobile communication terminal 100-1 shown in FIG 5.

If the multimedia module 120 detects an idle mode in step 612, the multimedia module 120 determines if a program information displaying function is set in step 614. If the program information displaying function is set, the multimedia module 120 creates DMB program information based on EPG information stored in the second memory 125 in step 616. The DMB program information may be set in such a manner that the DMB program information satisfies a predetermined criterion (condition).

If, however, the terminal is not in an idle mode in step 612, or the broadcasting slide function is not set in step 614, the process ends.

Herein, the predetermined criterion may be set by a user or based on time or channels. In further detail, the DMB program information may be made based on EPG information regarding broadcasting channels in overall time or current time. The multimedia module 120 determines if a folder of the mobile communication system 100-1 is opened in step 618.

If the folder of the mobile communication system 100-1 is opened, the multimedia module 120 controls the second display unit 123 to display DMB program information on a text slide area TSA of a background image in step 620. If the folder is not opened, the multimedia module 120 controls the first display unit 112 to display DMB program information on a text slide area TSA of a background image in step 622-1 as shown in FIGs 2A and 2B. A user can select a channel based on the DMB program information. Herein, the user can use a long key in order to select the channel.

The multimedia module 120 waits for the long key in step 624. If the multimedia module 120 detects that the long key is pressed, the multimedia module 120 stops the display of the DMB program information in step 626. In step 628, the DMB module 122 is operated, receives a broadcasting program corresponding to the input channel number, and displays the broadcasting program on the second display unit 123 through the multimedia module 120.

Step 626 may be performed or not as needed. For example, when the folder is not opened in step 618, it is unnecessary to stop displaying DMB program information because the DMB program information is displayed on the first display unit 112. Although not shown, when the folder is opened in step 618, two display units 112 and 123 may be realized in such a manner that both the units 112 and 123 display DMB program information. In this case, it is unnecessary to stop the display of DMB program information by the first display unit 112.

The long key for the channel number is valid for a program information displaying function. In other words, when a predetermined numeral key is pressed for a long time in the program information displaying function, the program of a corresponding DMB channel is displayed.

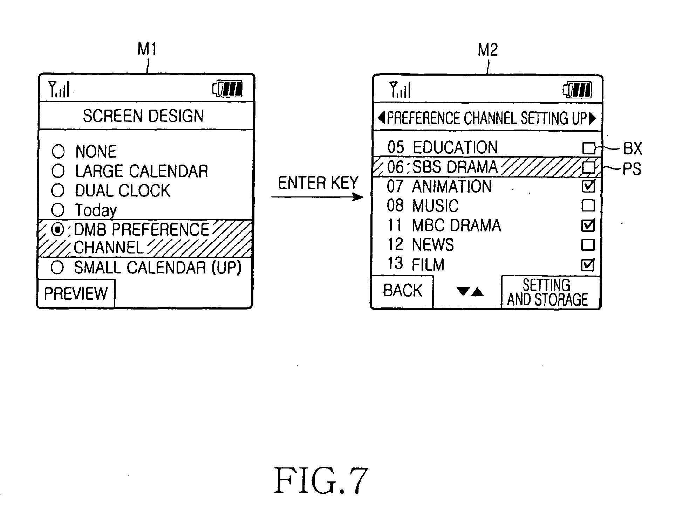

FIG 7 is a view illustrating a menu image for preference channel registration used for displaying DMB program information according to a preferred embodiment of the present invention.

Reference numeral M1 represents an initial menu image in an idle mode. If the user selects an item of a "DMB preference channel" among items displayed on the initial menu image M1 and presses an 'Enter' key, a "preference channel setting up' sub-menu image shown through reference numeral M2 is displayed. The user can select desired items among items displayed on the sub-menu image M2. Each item includes a channel number and a channel name. For example, '05' of an item '05 Education' represents a channel number, and 'Education' of the '05 Education' represents a channel name. Although a shown example displays seven items on one screen, other items can be displayed through upward and downward scrolling using '▲' and '▼ ' keys.

The user brings desired items into focus PS and then selects the desired items using check boxes BX (these check boxes may be realized in such a manner that the check boxes are marked by pressing a specific key). When the user selects all desired items and then presses the 'Enter' key, the selected items are registered in a memory (e.g., the second memory 125) as preference channels.

FIG. 8 illustrates three background images which can be displayed in the idle mode before a program of a corresponding channel is displayed in the DMB mode through user selection.

Reference numeral M3 shows an image display state in the idle mode when there is no registered preference channel even though the display of the DMB preference channel is set up.

Reference numeral M4 shows an image display state in the idle mode when the display of the DMB preference channel is set up, and there are registered preference channels. The reference numeral M4 shows that four lines may be displayed at the same time, and one piece of program information may be displayed in one line. One piece of program information includes a channel icon (e.g., a video channel icon, an audio channel icon, and a premium channel icon), a channel number, and a program name. "• 07 Simpson" denotes the channel icon '●' (herein, '●' mary be represents a video channel), the channel number '07', and the program name 'Simpson', respectively.

Reference numeral M5 shows a case in which the user inputs '31' when one of two background images M3 and M4 is displayed. Thereafter, if the user presses a specific key (e.g., '*'), the 31' is recognized as the channel number so that switching to the DMB mode starts.

Reference numeral M6 shows an image state in which the switching to the DMB mode is achieved, and a DMB program corresponding to the channel number '31' is displayed on the screen.

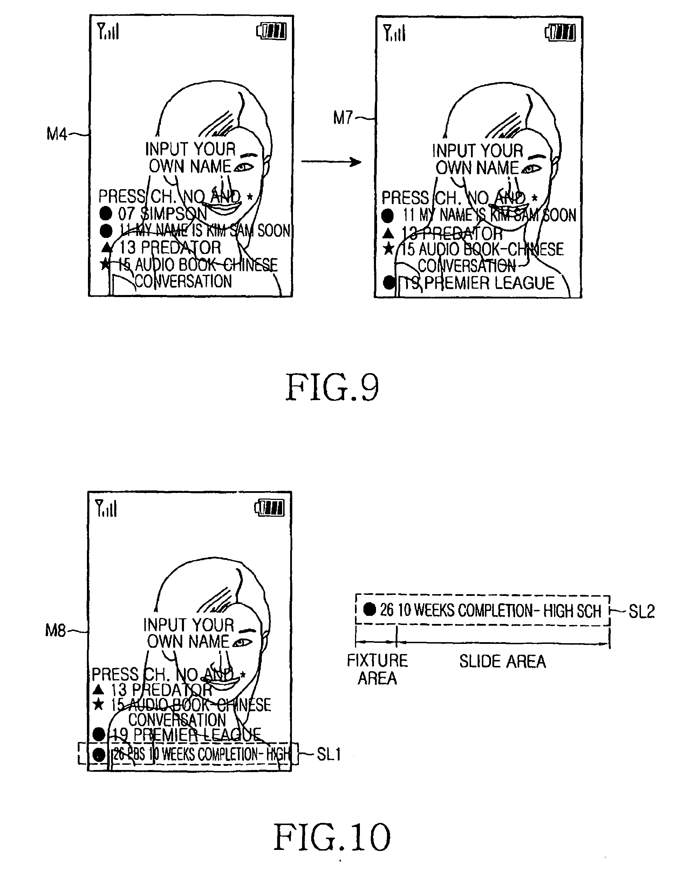

FIG 9 is a view for explaining the upward scrolling and the downward scrolling in the image in which the DMB program information is displayed in the idle mode according to a preferred embodiment of the present invention.

The M4 shows an image display state in the idle mode when the display of the DMB preference channel is set up, and there are registered preference channels. The M4 shows the image display state on the assumption that four pieces of program information can be displayed on one image. In a case in which the user has registered seven preference channels in advance, even though four pieces of program information is displayed on one image, remaining three pieces of program information is displayed by performing the upward/downward scrolling.

Reference numeral M7 shows an image display state in which the upward scrolling of one line (one item) is achieved in the image display state of the M4. The image M7 shows that program information "● 07 Simpson" displayed on the image M4 is disappeared, and "● 19 premier league" is displayed.

The scrolling based on a unit of a line may be periodically performed. For example, through the scrolling, the image M4 may be maintained for 15 seconds and then changed into the image M7.

FIG 10 is a view for explaining left directional scrolling in the image in which the DMB program information is displayed in the idle mode according to a preferred embodiment of the present invention.

Reference numeral M8 shows an image display state in the idle mode when the display of the DMB preference channel is set up, and there are selected preference channels. When one piece of program information is displayed in one line while displaying four pieces of program information as shown in FIG 10, certain program information may not be displayed in one line at a time because contents of the program information are long. In this case, the entire contents of the program information may be displayed by performing scrolling in left and right directions. For example, on the assumption that the entire content of "• 26 EBS 10 weeks completion-high" is "• 26 EBS 10 weeks completion-high school 3^{rd} grades mathematics for the academic aptitude test", the user may know the entire contents only when the scrolling is periodically performed in the left and right directions. A channel icon and a channel number of the program information do not undergo the scrolling because they are displayed on a fixture area, and only a program name undergoes the scrolling because it is displayed on a scroll area. Reference numeral SL2 shows a state in which a portion of an area SL1 is scrolled by one word in the left direction. In "26 EBS 10 weeks completion -high" displayed on the area SL 1 of the image M8, 'EBS' in a beginning part of the scroll area is disappeared, and 'sch' of 'school' is newly displayed. Herein, the channel icon '●' and the channel number '26' in the fixture area do not undergo the scrolling.

The left/right scrolling may be realized in such a manner that the left/right scrolling can be performed with respect to all pieces of program information at the same time, or one piece of program information sequentially.

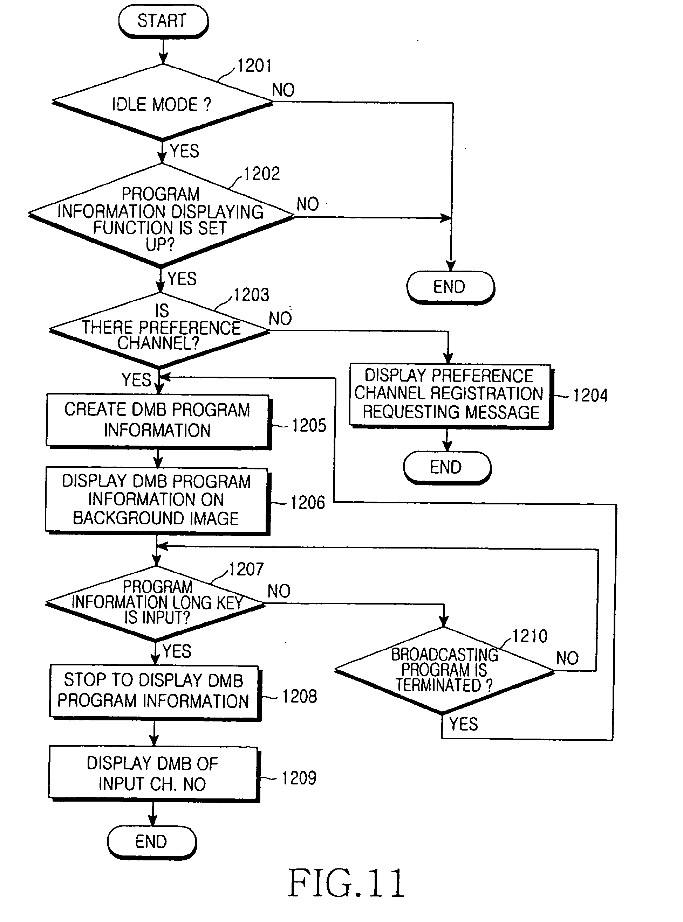

FIG 11 is a flowchart illustrating a method of displaying DMB program information on a background image in an idle mode according to a preferred embodiment of the present invention.

If the multimedia module 120 detects an idle mode in step 1201, the multimedia module 120 determines if a program information displaying function has been set up in step 1202. If a program information displaying function has been set up, the multimedia module 120 determines if preference channels have been registered in step 1203. If the preference channels have been registered, the multimedia module 120 creates DMB program information based on EPG information stored in the second memory 125 in step 1205. For example, if a user has registered four preference channels, four pieces of DMB program information are created. In contrast, if the multimedia module 120 determines that there is not preference channel, the multimedia module 120 controls a preference channel registration requesting message to be displayed on a background image in step 1204. According to an embodiment of the present invention, although steps 1203 and 1204 are included under the premise of preference channel registration, it is natural that the method be performed with respect to all channels. In this case, steps 1203 and 1204 are not required.

The multimedia module 120 controls the created program information to be displayed on the background image in step 1206, and the user can select a desired channel through the displayed DMB program information. A long key may be used for the selection of the desired channel.

The multimedia module 120 determines if the long key for a channel number is input in step 1207. If the multimedia module 120 detects the input of the long key for a channel number, the multimedia module 120 stops to display the DMB program information in step 1208. The multimedia module 120 performs a control operation in such a manner that a broadcasting program corresponding to the input channel number is displayed in step 1209. In other words, the DMB module 120 is controlled to receive a broadcasting program corresponding to the input channel number, and the second display unit 123 is controlled to display the broadcasting program.

If the input of the long key for the channel number is not detected in step 1207, the multimedia module 120 determines if it is time to terminate the broadcasting program corresponding to the program information which is currently displayed in step 1210. If it is not time to terminate the broadcasting program, the multimedia module 120 returns to step 1207. If it is time to terminate the broadcasting program, the multimedia module 120 returns to step 1205 in order to create DMB program information to be newly displayed by searching for EPG information about a next broadcasting program from the second memory unit 125. In other words, if it is time to terminate a broadcasting program of a certain preference channel, program information about a next broadcasting program is created. Although broadcasting programs of all preference channels are not terminated at the same time except for a special case, it is sufficient to create program information about next broadcasting information of all preference channels if the broadcasting programs of all preference channels are terminated at the same time.

For example, the multimedia module may be realized in such a manner that, when program information of a certain broadcasting program is displayed on a background image in the idle mode (e.g., step 1206), the multimedia module recognizes time of terminating the broadcasting program, drives a timer by comparing the time of terminating the broadcasting program with a current time, and then accesses the second memory 125 if the timer is terminated.

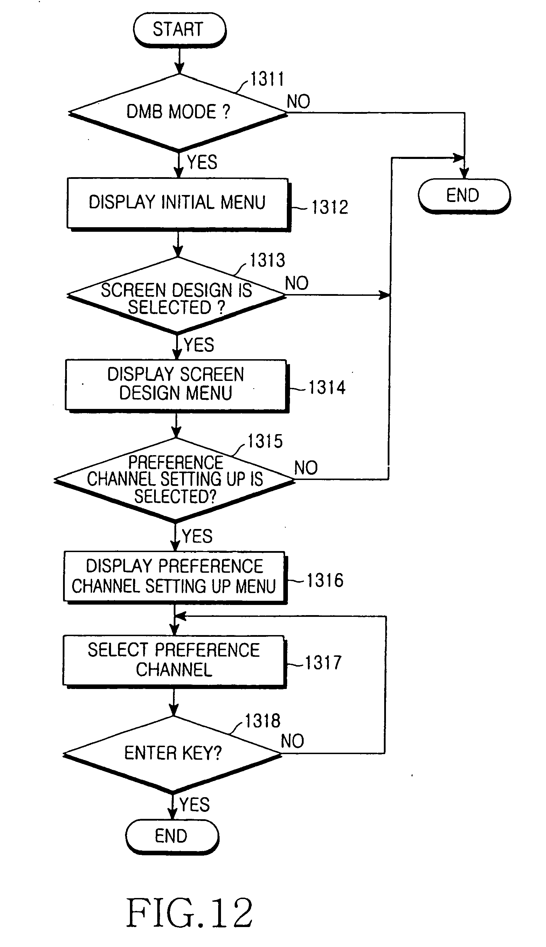

FIG 12 is a flowchart illustrating a method of registering preference channels in order to display DMB program information on a background image in an idle mode according to a preferred embodiment of the present invention.

The multimedia module 120 determines if a current terminal has a DMB mode in step 1311. If it is determined that the current terminal has a DMB mode, the multimedia module 120 performs a control operation such that an initial menu is displayed on the second display unit 123 in step 1312. If a user having recognized the initial menu selects an item of "screen design", the multimedia module 120 detects the selection of the item in step 1313 and displays a screen design menu (e.g., reference numeral M1 shown in FIG 7) in step 1314. If the user having recognized the screen design menu selects an item of " preference channel setting up", the multimedia module 120 detects the selection of the item in step 1315 and displays a preference channel setting up menu (e.g., reference numeral shown in FIG 7) in step 1316. Steps 1317 and 1318 are used for allowing the user having recognized the preference channel setting up menu to select at least one preference channel. The multimedia module 120 detects and stores a preference channel selected by the user through the key input unit 113 in step 1317 and determines if an 'Enter' key is input in step 1318. In this case, if the input of the 'Enter key' is detected, the multimedia module 120 recognizes the input of the 'Enter key' as the termination of the preference channel selection and terminates the operation of registering preference channels. In contrast, if the input of the 'Enter key' is not detected, the multimedia module 120 determines that there are further selections for other preference channels, so the procedure returns to step 1317.

Although not shown in FIG 3 or FIG. 5 described above in detail, the second memory 125 may be realized using nano-flash memories and SDRAMs. The received EFG information is stored in the nano-flash memories and is copied into the SDRAMs when an operation relating to the EPG information (e.g., program information is created) is performed.

As shown in FIG 3, when the phone module 110 and the multimedia module 120 have the first display unit 112 and the second display unit 123, respectively, the multimedia module 120 transfers EPG program information to the phone module 110 by using dual port RAMs (DPRAMs) or arm internal memories (AIMs) (not shown) such that the program information can be displayed through the first display unit 112 controlled by the phone module 110.

Although the creation of DMB program information relates to overall channels in step 616 of FIG 4, since the multimedia module 120 may create only corresponding DMB program information by reading out only EPG information corresponding to registered channels from the second memory unit 125 when preference channels are previously registered in a preference channel storing area of the mobile communication terminal as shown in FIG 13, necessity for showing needless DMB program information by a user is obviated, improving user satisfaction.

As described above, the mobile communication terminal may be constructed using only one display unit or as one body, or may have another type instead of a folder type. In this case, it is well known to those skilled in the art that a folder state determining step of step 618 or the step of selecting a display unit for displaying the DMB program information is unnecessary.

In addition, mobile communication terminals may be constructed in such a manner that their control units control MP3 player functions, digital video disc player functions, or telematics functions according to types of the mobile communication terminals.

As described above, according to the present invention, when a user wants to recognize information about a program which is currently broadcasted through a specific channel, the user can recognize the information in an idle mode instead of a DMB mode, so that the user feels convenient and unnecessary power consumption is prevented (a DMB module is driven in the DMB mode).

While the invention has been shown and described with reference to certain preferred embodiments thereof, it will be understood by those skilled in the art that various changes in form and details may be made therein without departing from the scope of the invention. Consequently, the scope of the invention should not be limited to the embodiments discussed herein, but should be defined by the appended claims.

## Claims

1. A mobile terminal capable of receiving digital broadcasting comprising an apparatus (100, 100 - 1) for displaying digital broadcasting program information, the apparatus comprising:
a digital multimedia broadcasting unit (122) for receiving broadcasting channel guide information when the mobile terminal is in a digital multimedia broadcasting mode;
a memory (125) for storing received broadcasting channel guide information;
a control unit (110, 120) for creating program information based on the broadcasting channel guide information; and
a display unit (112, 123) for displaying the program information on a background image when the mobile terminal is in an idle mode without being on a digital multimedia broadcasting mode in which said digital multimedia broadcasting unit is driven.

2. The mobile terminal as claimed in claim 1, wherein the control unit periodically determines if time of terminating a current broadcasting program arrives, and creates program information corresponding to a new program in real time based on the stored broadcasting channel guide information if the time arrives such that the program information is displayed on the background image.

3. The mobile terminal as claimed in claim 1 or 2, wherein the control unit (110, 120) scrolls the program information displayed on the background image in a predetermined direction.

4. The mobile terminal as claimed in any of claim 3, wherein the predetermined direction corresponds to left and right directions or up and down directions.

5. The mobile terminal as claimed in any of claims 1 to 4, wherein at least one piece of program information is displayed on an entire area or a partial area of the background image.

6. The mobile terminal as claimed in any of claims 1 to 5, at least one piece of program information corresponds to at least one piece of program information of a preference channel registered by a user in advance.

7. The mobile terminal as claimed in any of claims 1 to 6, further comprising a timer for operating with a predetermined period, wherein the control unit determines with the predetermined period if time of terminating a current broadcasting program arrives and creates program information corresponding to a new program in real time based on the stored broadcasting channel guide information if the time arrives such that the program information is displayed on the background image.

8. The mobile terminal as claimed in any of claims 1 to 7, wherein the program information is displayed on a text slide area of the background image.

9. The mobile terminal as claimed in any of claims 1 to 8, wherein the control unit (110, 120) includes a phone module (110) and a multimedia module (120) and the phone module controls the program information received from the multimedia module to be displayed on a text slide area of an image of the display unit (112).

10. The mobile terminal as claimed in any of claims 1 to 9, wherein the control unit (110, 120) controls an MP3 player function.

11. The mobile terminal as claimed in any of claims 1 to 10, wherein the control unit (110, 120) controls a digital video-disc player function.

12. The mobile terminal as claimed in any of claims 1 to 11, wherein the control unit (110, 120) controls a telematics functions.

13. The mobile terminal as claimed in any of claims 1 to 12, wherein the display unit includes a first display unit (112) for displaying information regarding a portable telephone function of the terminal and a second display unit (123) for displaying the digital broadcasting program.

14. The mobile terminal as claimed in claim 13, wherein the control unit (110, 120) detects a folder state and controls the program information to be displayed on the second display unit (123) when the folder is opened.

15. The mobile terminal as claimed in claim 13, wherein the control unit (110, 120) controls the program information to be displayed on an image of the first display unit (112) when the folder is closed.

16. A method for displaying digital broadcasting program information in a mobile communication terminal (100, 100 - 1) including a display unit (112, 123) and a digital multimedia broadcasting unit (122), the method comprising the steps of:
operating the terminal in a digital broadcasting mode, wherein the digital multimedia broadcasting unit is driven, or in an idle mode;
storing received broadcasting channel guide information in a memory;
creating program information based on the stored broadcasting channel guide information; and
displaying the created program information on a background image of the display unit (112, 123) when the terminal is in the idle mode without entering into the digital multimedia broadcasting mode in which said digital multimedia broadcasting unit is driven.

17. The method as claimed in claim 16, further comprising a step of driving the digital broadcasting receiving unit (122) if selection of a channel number by a user is detected, and receiving a digital broadcasting program corresponding to the selected channel number.

18. The method as claimed in claims 16 or 17, further comprising the steps of:
determining if time of terminating a current broadcasting program arrives; and
if the time arrives, creating program information corresponding to a newly starting program in real time based on the stored broadcasting channel guide information such that the program information is displayed on the background image.

19. The method as claimed in any of claims 16 to 18, further comprising a step of registering at least one preference channel in a digital multimedia broadcasting mode, wherein at least one piece of program information displayed on a background image when the terminal has the idle mode corresponds to program information created based on the broadcasting channel guide information corresponding to the registered preference channel.

20. The method as claimed in any of claims 16 to 19, further comprising a step of displaying the program information by scrolling the program information with a predetermined period in a predetermined pattern.

21. The method as claimed in any of claims 16 to 20, wherein in the step of displaying the created program information, the program information is displayed on a text slide area of the background image.

22. The method as claimed in any of claims 16 to 21, wherein the program information is created based on a predetermined criterion.

23. The method as claimed in claim 22, wherein the predetermined criterion is set by the user.

24. A method as claimed in claim 16, wherein a first module (110) controls a first function, a first display unit (112) performs display according to the first function, a second module (120) controls a multimedia function, and a second display unit (123) performs display according to the multimedia function;
the second module determines in an idle mode if a program information displaying function is set;
if a program information displaying function is set, program information based on the broadcasting channel guide information is created by the second module (120);
if it is detected that the folder is opened, the second module (120) displays the created program information on a text slide area of a background image of the second display unit (123);
if it is not detected that the folder is opened, the second module (120) transmits the created program information to the first module (110); and
the first module (110) receives the program information and displays the program information on a text slide area of a background image in the first display unit.

25. The method as claimed in claim 24, wherein the second module (120) determines if a broadcasting slide function is set in an idle mode.

26. The method as claimed in claim 24 or 25, further comprising the steps of:
if the first module (110) detects that a channel number is input by a user after the program information is displayed on the text slide area of the background image in the first display unit (112), displaying a folder open request message on the text slide area of the background image in the first display unit (112); and
if the first module (110) detects that the folder is opened after the folder open request message is displayed, requesting digital broadcasting corresponding to the input channel number to the second module (120).

27. The method as claimed in any of claims 24 to 26, wherein the first module (110) includes a phone module for controlling a portable telephone function.

28. The method as claimed in any of claims 24 to 27, further comprising a step of stopping display of the second display unit (123) for the program information and displaying the digital broadcasting corresponding to the input channel number on the second display unit (123) if the second module (120) detects that the user inputs the channel number after the program information is displayed on the text slide area of the background image in the second display unit (123).

29. The method as claimed in claim 16, further comprising the step of detecting channel guide information stored in the memory and creating program information satisfying a predetermined criterion.

30. The method as claimed in claim 29, further comprising the steps of:
driving the digital broadcasting receiving unit (122) if it is detected that a user selects a program number after the program information is displayed; and
receiving digital broadcasting program corresponding to the selected channel number and providing the digital broadcasting program to the display unit (112, 123) by the digital broadcasting receiving unit (122).

31. The method as claimed in claims 29 or 30, further comprising a step of determining if a program information displaying function is set when the mobile communication terminal is in idle mode.

32. The method as claimed in any of claims 29 to 31, wherein the predetermined criterion is set by a user and includes time and channels.

## Patentansprüche

1. Mobil-Endgerät, das in der Lage ist, Digitalrundfunk zu empfangen, und das eine Vorrichtung (100, 100-1) zum Anzeigen von Digitalrundfunk-Programminformationen umfasst, wobei die Vorrichtung umfasst:
eine Digital-Multimedia-Rundfunkeinheit (122), mit der Rundfunk-Kanalführerinformationen empfangen werden, wenn sich das Mobil-Endgerät in einem digitalen Multimedia-Rundfunkmodus befindet;
einen Speicher (125) zum Speichern empfangener Rundfunk-Kanalführerinformationen;
eine Steuereinheit (110, 120) zum Erzeugen von Programminformationen auf Basis der Rundfunk-Kanalführerinformationen; und
eine Anzeigeeinheit (112, 123), mit der die Programminformationen auf einem Hintergrundbild angezeigt werden, wenn sich das Mobil-Endgerät in einem Ruhemodus befindet,
ohne dass es sich in einem Digital-Multimedia-Rundfunkmodus befindet, in dem die Digital-Multimedia-Rundfunkeinheit angesteuert wird.

2. Mobil-Endgerät nach Anspruch 1, wobei die Steuereinheit periodisch feststellt, ob der Zeitpunkt des Endes eines aktuellen Rundfunkprogramms erreicht ist, und sie Programminformationen, die einem neuen Programm entsprechen, in Echtzeit auf Basis der gespeicherten Rundfunk-Kanalführerinformationen erzeugt, wenn der Zeitpunkt erreicht ist, so dass die Programminformationen auf dem Hintergrundbild angezeigt werden.

3. Mobil-Endgerät nach Anspruch 1 oder 2, wobei die Steuereinheit (110, 120) die auf dem Hintergrundbild angezeigten Programminformationen in einer vorgegebenen Richtung verschiebt.

4. Mobil-Endgerät nach Anspruch 3, wobei die vorgegebene Richtung der Links- und der Rechts-Richtung oder der Aufwärts- und der Abwärts-Richtung entspricht.

5. Mobil-Endgerät nach einem der Ansprüche 1 bis 4, wobei wenigstens ein Element von Programminformationen auf einer Gesamtfläche oder einer Teilfläche des Hintergrundbildes angezeigt wird.

6. Mobil-Endgerät nach einem der Ansprüche 1 bis 5, wobei wenigstens ein Element von Programminformationen wenigstens einem Element von Programminformationen eines bevorzugten Kanals entspricht, der von einem Benutzer im Voraus registriert wird.

7. Mobil-Endgerät nach einem der Ansprüche 1 bis 6, das des Weiteren einen Zeitgeber umfasst, der mit einer vorgegebenen Periode arbeitet, wobei die Steuereinheit mit der vorgegebenen Periode feststellt, ob der Zeitpunkt des Endes eines aktuellen Rundfunkprogramms erreicht ist, und sie Programminformationen, die einem neuen Programm entsprechen, in Echtzeit auf Basis der gespeicherten Rundfunk-Kanalführerinformationen erzeugt, wenn der Zeitpunkt erreicht ist, so dass die Programminformationen auf dem Hintergrundbild angezeigt werden.

8. Mobil-Endgerät nach einem der Ansprüche 1 bis 7, wobei die Programminformationen auf einer Text-Schiebefläche des Hintergrundbildes angezeigt werden.

9. Mobil-Endgerät nach einem der Ansprüche 1 bis 8, wobei die Steuereinheit (110, 120) ein Telefon-Modul (110) sowie ein Multimedia-Modul (120) enthält und das Telefon-Modul die von dem Multimedia-Modul empfangenen Programminformationen so steuert, dass sie auf einem Text-Schiebebereich eines Bildes der Anzeigeeinheit (112) angezeigt werden.

10. Mobil-Endgerät nach einem der Ansprüche 1 bis 9, wobei die Steuereinheit (110, 120) eine MP3-Player-Funktion steuert.

11. Mobil-Endgerät nach einem der Ansprüche 1 bis 10, wobei die Steuereinheit (110, 120) eine DVD-Player-Funktion steuert.

12. Mobil-Endgerät nach einem der Ansprüche 1 bis 11, wobei die Steuereinheit (110, 120) eine Telematik-Funktion steuert.

13. Mobil-Endgerät nach einem der Ansprüche 1 bis 12, wobei die Anzeigeeinheit eine erste Anzeigeeinheit (112) zum Anzeigen von Informationen bezüglich einer Mobiltelefon-Funktion des Endgerätes sowie eine zweite Anzeigeeinheit (123) zum Anzeigen des Digitalrundfunk-Programms enthält.

14. Mobil-Endgerät nach Anspruch 13, wobei die Steuereinheit (110, 120) einen Zustand eines Klappdeckels erfasst und die Programminformationen so steuert dass sie auf der zweiten Anzeigeeinheit (123) angezeigt werden, wenn der Klappdeckel geöffnet ist.

15. Mobil-Endgerät nach Anspruch 13, wobei die Steuereinheit (110, 120) die Programminformationen so steuert, dass sie auf einem Bild der ersten Anzeigeeinheit (112) angezeigt werden, wenn der Klappdeckel geschlossen ist.

16. Verfahren zum Anzeigen von Digitalrundfunk-Programminformationen in einem Mobilkommunikations-Endgerät (100, 100-1), das eine Anzeigeeinheit (112, 123) sowie eine Digital-Multimedia-Rundfunkeinheit (122) enthält, wobei das Verfahren die folgenden Schritte umfasst:
Betreiben des Endgerätes in einem Digitalrundfunk-Modus, in dem die Digital-Multimedia-Rundfunkeinheit angesteuert wird, oder in einem Ruhemodus;
Speichern empfangener Rundfunk-Kanalführerinformationen in einem Speicher;
Erzeugen von Programminformationen auf Basis der gespeicherten Rundfunk-Kanalführerinformationen; und
Anzeigen der erzeugten Programminformationen auf einem Hintergrundbild der Anzeigeeinheit (112, 123), wenn sich das Endgerät in dem Ruhemodus befindet, ohne in den Digital-Multimedia-Rundfunkmodus einzutreten, in dem die Digital-Multimedia-Rundfunkeinheit angesteuert wird.

17. Verfahren nach Anspruch 16, das des Weiteren einen Schritt umfasst, in dem die Digitalrundfunk-Empfangseinheit (122) angesteuert wird, wenn Auswahl einer Kanalnummer durch einen Benutzer erfasst wird, und ein Digitalrundfunk-Programm empfangen wird, das der ausgewählten Kanalnummer entspricht.

18. Verfahren nach Anspruch 16 oder 17, das des Weitern die folgenden Schritte umfasst:
Feststellen, ob der Zeitpunkt des Endes eines aktuellen Rundfunkprogramms erreicht ist; und
wenn der Zeitpunkt erreicht ist, Erzeugen von Programminformationen, die einem neu beginnenden Programm entsprechen, in Echtzeit auf Basis der gespeicherten Rundfunk-Kanalführerinformationen, so dass die Programminformationen auf dem Hintergrundbild angezeigt werden.

19. Verfahren nach einem der Ansprüche 16 bis 18, das des Weiteren einen Schritt des Registrierens wenigstens eines bevorzugten Kanals in einem Digital-Multimedia-Rundfunkmodus umfasst, wobei wenigstens ein Element von Programminformationen, die auf einem Hintergrundbild angezeigt werden, wenn sich das Endgerät in dem Ruhe-Modus befindet, Programminformationen entspricht, die auf Basis der Rundfunk-Kanalführerinformationen erzeugt werden, die dem registrierten bevorzugten Kanal entsprechen.

20. Verfahren nach einem der Ansprüche 16 bis 19, das des Weiteren einen Schritt des Anzeigens der Programminformationen durch Verschieben der Programminformationen mit einer vorgegebenen Periode in einem vorgegebenen Muster umfasst.

21. Verfahren nach einem der Ansprüche 16 bis 20, wobei in dem Schritt des Anzeigens der erzeugten Programminformationen die Programminformationen auf einer Text-Schiebefläche des Hintergrundbildes angezeigt werden.

22. Verfahren nach einem der Ansprüche 16 bis 21, wobei die Programminformationen auf Basis eines vorgegebenen Kriteriums erzeugt werden.

23. Verfahren nach Anspruch 22, wobei das vorgegebene Kriterium durch den Benutzer festgelegt wird.

24. Verfahren nach Anspruch 16, wobei ein erstes Modul (110) eine erste Funktion steuert, eine erste Anzeigeeinheit (112) Anzeige gemäß der ersten Funktion durchführt, ein zweites Modul (120) eine Multimedia-Funktion steuert und eine zweite Anzeigeeinheit (123) Anzeige gemäß der Multimedia-Funktion durchführt;
das zweite Modul in einem Ruhe-Modus feststellt, ob eine Programminformations-Anzeigefunktion eingestellt ist;
wenn eine Programminformations-Anzeigeinformation eingestellt ist, die Programminformationen auf Basis der Rundfunk-Kanalführerinformationen durch das zweite Modul (120) erzeugt werden;
wenn erfasst wird, dass der Klappdeckel geöffnet ist, das zweite Modul (120) die erzeugten Programminformationen auf einer Text-Schiebefläche eines Hintergrundbildes der zweiten Anzeigeeinheit (123) anzeigt;
wenn nicht erfasst wird, dass der Klappdeckel geöffnet ist, das zweite Modul (120) die erzeugten Programminformationen zu dem ersten Modul (110) überträgt; und
das erste Modul (110) die Programminformationen empfängt und die Programminformationen auf einer Text-Schiebefläche eines Hintergrundbildes in der ersten Anzeigeeinheit anzeigt.

25. Verfahren nach Anspruch 24, wobei das zweite Modul (120) in einem Ruhe-Modus feststellt, ob eine Rundfunk-Schiebefunktion eingestellt ist.

26. Verfahren nach Anspruch 24 oder 25, das des Weiteren die folgenden Schritte umfasst:
wenn das erste Modul (110) erfasst, dass eine Kanalnummer von einem Benutzer eingegeben wird, nachdem die Programminformationen auf der Text-Schiebebereich des Hintergrundbildes in der ersten Anzeigeeinheit (112) angezeigt werden, Anzeigen einer Nachricht, mit der zum Öffnen des Klappdeckels aufgefordert wird, auf der Text-Schiebefläche des Hintergrundbildes in der ersten Anzeigeeinheit (112); und
wenn das erste Modul (110) erfasst, dass der Klappdeckel geöffnet ist, nachdem die Nachricht angezeigt wird, mit der zum Öffnen des Klappdeckels aufgefordert wird, Anfordern von Digitalrundfunk entsprechend der eingegebenen Kanalnummer von dem zweiten Modul (120).

27. Verfahren nach einem der Ansprüche 24 bis 26, wobei das erste Modul (110) ein Telefon-Modul zum Steuern einer Mobiltelefon-Funktion enthält.

28. Verfahren nach einem der Ansprüche 24 bis 27, das des Weiteren einen Schritt des Unterbrechens der Anzeige der Programminformationen durch die zweite Anzeigeeinheit (123) und des Anzeigens des Digitalrundfunks entsprechend der eingegebenen Kanalnummer auf der zweiten Anzeigeeinheit (123) umfasst, wenn das zweite Modul (120) erfasst, dass der Benutzer die Kanalnummer eingibt, nachdem die Programminformationen auf der Text-Schiebefläche des Hintergrundbildes in der zweiten Anzeigeeinheit (123) angezeigt werden.

29. Verfahren nach Anspruch 16, das des Weiteren den Schritt des Erfassens in dem Speicher gespeicherter Kanalführerinformationen sowie des Erzeugens von Programminformationen umfasst, die ein vorgegebenes Kriterium erfüllen.

30. Verfahren nach Anspruch 29, das des Weiteren die folgenden Schritte umfasst:
Ansteuern der Digitalrundfunk-Empfangseinheit (122), wenn erfasst wird, dass ein Benutzer eine Programmnummer auswählt, nachdem die Programminformationen angezeigt werden; und
Empfangen eines Digitalrundfunk-Programms, das der ausgewählten Kanalnummer entspricht, und Bereitstellen des Digitalrundfunk-Programms auf der Anzeigeeinheit (112, 123) durch die Digitalrundfunk-Empfangseinheit (122).

31. Verfahren nach den Ansprüchen 29 oder 30, das des Weiteren den Schritt umfasst, in dem festgestellt wird, ob eine Programminformations-Anzeigefunktion eingestellt ist, wenn sich das Mobilkommunikations-Endgerät im Ruhemodus befindet.

32. Verfahren nach einem der Ansprüche 29 bis 31, wobei das vorgegebene Kriterium von einem Benutzer festgelegt wird und Zeit sowie Kanäle einschließt.

## Revendications

1. Terminal mobile capable de recevoir une diffusion numérique comportant un appareil (100, 100 - 1) pour afficher des informations de programme de diffusion numérique, l'appareil comprenant :
une unité de diffusion multimédia numérique (122) pour recevoir des informations de guidage de canal de diffusion lorsque le terminal mobile est en mode de diffusion multimédia numérique ;
une mémoire (125) pour stocker des informations de guidage de canal de diffusion reçues ;
une unité de commande (110, 120) pour créer des informations de programme sur base des informations de guidage de canal de diffusion ; et
une unité d'affichage (112, 123) pour afficher les informations de programme sur une image d'arrière-plan lorsque le terminal mobile est en mode inactif sans être dans un mode de diffusion multimédia numérique dans lequel ladite unité de diffusion multimédia numérique est commandée.

2. Terminal mobile selon la revendication 1, dans lequel l'unité de commande détermine périodiquement si le moment d'arrêter un programme de diffusion en cours est arrivé, et crée des informations de programme correspondant à un nouveau programme en temps réel sur base des informations de guidage de canal de diffusion stockées si le moment de l'affichage des informations de programme sur l'image d'arrière-plan est arrivé.

3. Terminal mobile selon la revendication 1 ou 2, dans lequel l'unité de commande (110, 120) fait dérouler les informations de programme affichées sur l'image d'arrière-plan dans une direction prédéterminée.

4. Terminal mobile selon la revendication 3, dans lequel la direction prédéterminée correspond aux directions gauche et droite ou aux directions haut et bas.

5. Terminal mobile selon l'une quelconque des revendications 1 à 4, dans lequel au moins un élément d'information de programme est affiché sur la surface entière ou sur une surface partielle de l'image d'arrière-plan.

6. Terminal mobile selon l'une quelconque des revendications 1 à 5, dans lequel au moins un élément d'information de programme correspond à au moins un élément d'information de programme d'un canal de préférence enregistré à l'avance par un utilisateur.

7. Terminal mobile selon l'une quelconque des revendications 1 à 6, comprenant en outre une minuterie pour fonctionner selon une périodicité prédéterminée, dans lequel l'unité de commande détermine sur base de la périodicité prédéterminée si le moment d'arrêter un programme de diffusion en cours est arrivé, et crée des informations de programme correspondant à un nouveau programme en temps réel sur base des informations de guidage de canal de diffusion stockées si le moment de l'affichage des informations de programme sur l'image d'arrière-plan est arrivé.

8. Terminal mobile selon l'une quelconque des revendications 1 à 7, dans lequel les informations de programme sont affichées dans une zone de texte déroulante de l'image d'arrière-plan.

9. Terminal mobile selon l'une quelconque des revendications 1 à 8, dans lequel l'unité de commande (110, 120) comprend un module téléphonique (110) et un module multimédia (120) et le module téléphonique contrôle les informations de programme reçues du module multimédia à afficher dans une zone de texte déroulante d'une image de l'unité d'affichage (112).

10. Terminal mobile selon l'une quelconque des revendications 1 à 9, dans lequel l'unité de commande (110, 120) contrôle une fonction de lecteur MP3.

11. Terminal mobile selon l'une quelconque des revendications 1 à 10, dans lequel l'unité de commande (110, 120) contrôle une fonction de lecteur de disque vidéo numérique.

12. Terminal mobile selon l'une quelconque des revendications 1 à 11, dans lequel l'unité de commande (110, 120) contrôle une fonction télématique.

13. Terminal mobile selon l'une quelconque des revendications 1 à 12, dans lequel l'unité d'affichage comprend une première unité d'affichage (112) pour afficher des informations concernant une fonction de téléphonie portable du terminal et une seconde unité d'affichage (123) pour afficher le programme de diffusion numérique.

14. Terminal mobile selon la revendication 13, dans lequel l'unité de commande (110, 120) détecte un état de clapet et contrôle les informations de programme à afficher sur la seconde unité d'affichage (123) lorsque le clapet est ouvert.

15. Terminal mobile selon la revendication 13, dans lequel l'unité de commande (110, 120) contrôle les informations de programme à afficher sur une image de la première unité d'affichage (112) lorsque le clapet est fermé.

16. Procédé d'affichage d'informations de programme de diffusion numérique dans un terminal de communication mobile (100, 100-1) comprenant une unité d'affichage (112, 123) et une unité de diffusion multimédia numérique (122), le procédé comprenant les étapes consistant à :
faire fonctionner le terminal en mode de diffusion numérique, dans lequel l'unité de diffusion multimédia numérique est commandée ou se trouve dans un mode inactif ;
stocker des informations de guidage de canal de diffusion reçues dans une mémoire ;
créer des informations de programme sur base des informations de guidage de canal de diffusion stockées ; et
afficher les informations de programme créées sur une image d'arrière-plan de l'unité d'affichage (112, 123) lorsque le terminal est en mode inactif sans entrer dans le mode de diffusion multimédia numérique, dans lequel ladite unité de diffusion multimédia numérique est commandée.

17. Procédé selon la revendication 16, comprenant en outre une étape de commande de l'unité de réception de diffusion numérique (122) si la sélection d'un numéro de canal par un utilisateur est détectée, et la réception d'un programme de diffusion numérique correspondant au numéro de canal sélectionné.

18. Procédé selon la revendication 16 ou 17, comprenant en outre les étapes consistant à :
déterminer si le moment d'arrêter un programme de diffusion en cours est arrivé ; et
si ce moment arrive, créer des informations de programme correspondant à un programme démarrant récemment en temps réel sur base des informations de guidage de canal de diffusion stockées, de telle sorte que les informations de programme sont affichées sur l'image d'arrière-plan.

19. Procédé selon l'une quelconque des revendications 16 à 18, comprenant en outre une étape d'enregistrement d'au moins un canal de préférence selon un mode de diffusion multimédia numérique, dans lequel au moins un élément d'information de programme affiché sur une image d'arrière-plan lorsque le terminal est en mode inactif correspond aux informations de programme créées sur base des informations de guidage de canal de diffusion correspondant au canal de préférence enregistré.

20. Procédé selon l'une quelconque des revendications 16 à 19, comprenant en outre une étape d'affichage des informations de programme en faisant dérouler les informations de programme selon une périodicité prédéterminée et un motif prédéterminé.

21. Procédé selon l'une quelconque des revendications 16 à 20, dans lequel lors de l'étape d'affichage des informations de programme créées, les informations de programme sont affichées dans un zone de texte déroulante de l'image d'arrière-plan.

22. Procédé selon l'une quelconque des revendications 16 à 21, dans lequel les informations de programme sont créées sur base d'un critère prédéterminé.

23. Procédé selon la revendication 22, dans lequel les critères prédéterminés sont établis par l'utilisateur.

24. Procédé selon la revendication 16, dans lequel un premier module (110) contrôle une première fonction, une première unité d'affichage (112) effectue l'affichage conformément à la première fonction, un second module (120) contrôle une fonction multimédia, et une seconde unité d'affichage (123) effectue l'affichage conformément à la fonction multimédia ;
le second module détermine dans un mode inactif si une fonction d'affichage d'informations de programme est activée ;
si une fonction d'affichage d'informations de programme est activée, des informations de programme basées sur les informations de guidage de canal de diffusion sont créées par le second module (120) ;
si une position ouverte du clapet est détectée, le second module (120) affiche les informations de programme créées dans une
zone de texte déroulante d'une image d'arrière-plan de la seconde unité d'affichage (123) ;
si une position ouverte du clapet n'est pas détectée, le second module (120) transmet les informations de programme créées au premier module (110) ; et
le premier module (110) reçoit les informations de programme et affiche les informations de programme dans une zone de texte déroulante d'une image d'arrière-plan dans la première unité d'affichage.

25. Procédé selon la revendication 24, dans lequel le second module (120) détermine si une fonction de glissement de diffusion est activée dans un mode inactif.

26. Procédé selon la revendication 24 ou 25, comprenant en outre les étapes consistant à :
si le premier module (110) détecte qu'un numéro de canal est entré par un utilisateur après l'affichage des informations de programme dans la zone de texte déroulante de l'image d'arrière-plan dans la première unité d'affichage (112), afficher un message de demande d'ouverture de clapet dans la zone de texte déroulante de l'image d'arrière-plan dans la première unité d'affichage (112) ; et
si le premier module (110) détecte que le clapet est ouvert après affichage du message de demande d'ouverture de clapet, demander une diffusion numérique correspondant au numéro de canal entré dans le second module (120).

27. Procédé selon l'une quelconque des revendications 24 à 26, dans lequel le premier module (110) comprend un module téléphonique pour contrôler une fonction de téléphone portable.

28. Procédé selon l'une quelconque des revendications 24 à 27, comprenant en outre une étape d'arrêt d'affichage de la seconde unité d'affichage (123) pour les informations de programme et d'affichage de la diffusion numérique correspondant au numéro de canal entré dans la seconde unité d'affichage (123) si le second module (120) détecte que l'utilisateur entre le numéro de canal après l'affichage des informations de programme dans la zone de texte déroulante de l'image d'arrière-plan dans la seconde unité d'affichage (123).

29. Procédé selon la revendication 16, comprenant en outre l'étape consistant à détecter des informations de guidage de canal stockées dans la mémoire et créer des informations de programme satisfaisant à un critère prédéterminé.

30. Procédé selon la revendication 29, comprenant en outre les étapes consistant à :
commander l'unité de réception de diffusion numérique (122) s'il est détecté qu'un utilisateur sélectionne un numéro de programme après l'affichage d'informations de programme ; et
recevoir un programme de diffusion numérique correspondant au numéro de canal sélectionné et fournir le programme de diffusion numérique à l'unité d'affichage (112, 123) via l'unité de réception de diffusion numérique (122).

31. Procédé selon la revendication 29 ou 30, comprenant en outre une étape de détermination du fait qu'une fonction d'affichage d'informations de programme est établie lorsque le terminal de communication mobile est en mode inactif.

32. Procédé selon l'une quelconque des revendications 29 à 31, dans lequel le critère prédéterminé est établi par un utilisateur et comprend le temps et des canaux.
